# EUROPÄISCHE PATENTSCHRIFT

(11) **EP 2 186 183 B1**
(45) Veröffentlichungstag und Bekanntmachung des Hinweises auf die Patenterteilung: **24.04.2013**
(21) Anmeldenummer: 08760654.7
(22) Anmeldetag: 06.06.2008
(51) Int. Cl.: H02K 23/02

(54) **ELEKTRISCHE MASCHINE MIT IN NUTEN ANGEORDNETEN LEITERSCHLEIFEN, SOWIE VERFAHREN ZUM BETREIBEN DER ELEKTRISCHEN MASCHINE**
ELECTRIC MACHINE COMPRISING CONDUCTOR LOOPS ARRANGED INSIDE GROOVES, AND METHOD FOR OPERATING SAID ELECTRIC MACHINE
MACHINE ÉLECTRIQUE COMPRENANT DES BOUCLES CONDUCTRICES DISPOSÉES DANS DES RAINURES ET PROCÉDÉ POUR FAIRE FONCTIONNER CETTE MACHINE ÉLECTRIQUE

(30) Priorität: 02.08.2007 DE 102007036253
(43) Veröffentlichungstag der Anmeldung: 19.05.2010
(73) Patentinhaber: Robert Bosch GmbH, 70442 Stuttgart (DE)
(72) Erfinder: FABER, Thomas, 76744 Woerth-Maximiliansau (DE); ROOS, Gerald, 77855 Sasbachried (DE)
(86) Internationale Anmeldenummer: PCT/EP2008/057082
(87) Internationale Veröffentlichungsnummer: WO 2009/015930

(56) Entgegenhaltungen:
- EP-A- 0 689 054
- DE-A1- 4 229 045
- DE-A1- 19 631 828

## Beschreibung

### Stand der Technik

Die Erfindung geht aus von einer elektrischen Maschine mit in Nuten angeordneten Leiterschleifen, sowie einem Verfahren zum Betreiben der elektrischen Maschine nach der Gattung der unabhängigen Ansprüche.

Mit der EP 0 917 755 B1 ist eine Kommutierungsvorrichtung eines Gleichstrommotors bekannt geworden, bei der Bürsten an einer Kontaktfläche der Lamellen eines Kommutators anliegen. Dabei erfasst eine elektronische Schaltung die Frequenz der Welligkeit des Motorstroms, um daraus ein Maß für die Drehzahl des Elektromotors zu bestimmen. Zur Gewinnung von einer zuverlässigen Drehzahlinformation weisen die Kanten der Kommutatorlamellen einen bestimmten Winkel zur Längsachse des Kommutators, bzw. zu den Kanten der Bürsten auf. Ein solcher Kommutator ist sehr aufwändig herzustellen und bietet keine Möglichkeit, eine Frequenz der Welligkeit kleiner als die Nutfrequenz zu erzeugen.

Bei solchen Elektromotoren wird der Wechselanteil des Stromsignals zur Drehzahlerkennung ausgewertet. Die Welligkeit dieses Signals wird durch verschiedene Ursachen erzeugt. Ein großer Anteil an der Welligkeit hat die Anzahl der Nuten des Kommutators. Im Stromsignal lässt sich die Nutzahl und deren Vielfachen erkennen. Dabei tritt die Ordnung des kleinsten gemeinsamen Vielfachen aus Nutzahl und Magnet-Polzahl meist dominierend auf. Hervorgerufen wird diese Welligkeit im unteren Drehzahlbereich (kleinere Drehzahlen) und unter großer Last durch die Variation des Ankerwiderstandes über die Kommutierung. Nahe der Leerlaufdrehzahl und bei geringem Strom wird die Welligkeit durch die Variation der induzierten Spannung, hervorgerufen durch die Spulenwicklungen im Magnetfeld, erzeugt. Bei mittlerer Motorlast wird die Welligkeit im zeitlichen Verlauf des Stromsignals durch beide Effekte verursacht. Beide Effekte können zueinander phasenverschoben sein und sich in verschiedenen Arbeitspunkten eliminieren, so das die Nutordnung und deren Vielfachen im Stromverlauf über die Motorkennlinie deutlich variieren und auch verschwinden können.

Weiterhin treten im Stromverlauf Stromrippel mit Ordnungen kleiner als die der Nutordnung auf. Diese sind meist Vielfache der Magnetpole. Hervorgerufen werden diese Ordnungen der Stromrippel durch ungewollte Toleranzen in der Symmetrie des magnetischen Kreis wie z.B. Positions- oder Werkstofftoleranzen der Magnete. Diese Ordnungen im zeitlichen Stromverlauf verhindern durch deren Unregelmäßigkeit eine zuverlässige Auswertung zur Bestimmung der Motor-Drehzahlsignal. Zur Auswertung der Nutordnung der Stromrippel muss weiterhin die Welligkeit eine gewisse Amplitudenhöhe überschreiten, um die Signale auswerten zu können. Weiterhin variieren die Amplituden der Ordnungen über verschiedene Arbeitspunkte, was eine Auswertung zusätzlich erschwert. Bei Motoren mit größerer Nutzahl liegt die dominierende Ordnung im Stromverlauf der Stromrippel durch die hohe Anzahl der Nuten und Magnetpole so hoch, dass eine Auswerteelektronik mit höherer Abtastfrequenz zu Bestimmung der Motordrehzahl erforderlich wird. Dies bedeutet einen höheren Aufwand und höhere Kosten, da die Mikrocontroller schneller und besser sein müssen.

### Offenbarung der Erfindung

### Vorteile der Erfindung

Die erfindungsgemäße elektrische Maschine, sowie das erfindungsgemäße Verfahren zum Betreiben derselben mit den Merkmalen der unabhängigen Ansprüche haben demgegenüber den Vorteil, dass die Anzahl der Leiterschleifen in den Nuten des Rotors derart variiert wird, dass die Anzahl der Leiterschleifen nacheinander kommutierter Spulen in erster Näherung eine Sinuskurve ergibt. Solch eine sinusförmige Änderung der Anzahl der Leiterschleifen über die zeitliche Abfolge der Kommutierung generiert eine zusätzliche Welligkeit des Motorstromssignals, deren Frequenz dem Produkt aus der Polzahl, der Anzahl Perioden der Sinusfunktion pro Kommutierungsphase und der Drehfrequenz der elektrischen Maschine entspricht. Dadurch wird eine zusätzliche Welligkeit des Stromverlaufs erzeugt, welche in der Frequenz kleiner ist als die Nutfrequenz, die durch die Anzahl der Kommutatorlamellen erzeugt wird. Diese zusätzlich erzeugten Stromspitzen weisen unabhängig vom Arbeitspunkt der elektrischen Maschine und dem Betrag des Laststroms näherungsweise eine konstante Amplitude auf. Daher kann dieses überlagerte Stromrippel-Signal sehr günstig ausgewertet werden, um Informationen über die Drehzahl, bzw. Periodendauer der Rotorumdrehung zu ermitteln. Durch die sinusförmige Änderung der Leiteranzahl über den Kommutierungsumlauf lassen sich Störungen höherer Ordnungen des zusätzlichen Stromrippel-Signals weitgehend eliminieren. Dadurch können durch die Stromwelligkeit verursachte Geräuschanregungen der elektrischen Maschine stark reduziert werden und so trotz der Momentenwelligkeit ein relativ ruhiger Lauf für Komfortantriebe erzielt werden.

Durch die in den abhängigen Ansprüchen aufgeführten Maßnahmen sind vorteilhafte Weiterbildungen und Verbesserungen der in den unabhängigen Ansprüchen angegebenen Ausführungen möglich. Besonders vorteilhaft erweist es sich, die Anzahl der aufeinanderfolgend kommutierten Leiterschleifen um exakt eine Leiterschleife zu ändern. Dadurch wird eine möglichst glatte Sinuskurve der Leiterschleife-Änderung realisiert, wodurch die störende Geräuschanregung optimal unterdrückt wird. Dabei können optional auch zwei aufeinanderfolgende Spulen die gleiche Anzahl an Leiterschleifen aufweisen.

In einer bevorzugten Ausführung weist ein elektrischer Gleichstrommotor einen Rotor mit 14 Nuten auf, in die insgesamt ebenfalls 14 Spulen eingefügt sind. Diese Ausführung weist beispielsweise vier Magnetpole auf, die durch einen umlaufenden Magnetring erzeugt werden, der eine gleichmäßige Polringteilung von vorzugsweise 90 Grad aufweist. Bei dieser Ausführung kann durch die sinusförmige Änderung der Leiterschleifen-Anzahl über den Kommutatorumlauf ein einfach zu detektierendes Welligkeitssignal erzeugt werden, das beispielsweise vier Stromrippel pro Kommutatorumdrehung aufweist.

Besonders günstig ist es, wenn die Anzahl der Kommutatorlamellen, die vorzugsweise der Anzahl der Nuten des Rotors entspricht, nicht durch die Anzahl der Magnetpole teilbar ist Dadurch wird das Rast-Drehmoment der elektrischen Maschine reduziert und die Gleichlaufeigenschaften der elektrischen Maschine verbessert.

Besonders günstig ist es, genau eine Periode der Sinusfunktion über eine Kommutierungsphase mittels der Änderung der Leiterschleifen pro Spule auszubilden. Dadurch kann die Amplitude des zu detektierenden Stromrippels maximiert werden, wodurch die Auswertevorrichtung vereinfacht werden kann.

Dabei spielt es keine Rolle, wenn sich die Leiterschleifenanzahl der bezüglich des Rotorumfangs nebeneinander liegenden Nuten nicht kontinuierlich sinusförmig ändert. Entscheidend ist, dass sich die Leiterschleifenanzahl bezüglich der Abfolge der nacheinander kommutierten Spulen entsprechend einer Sinusfunktion ändert, was durch das verwendete Wickelschema von der Nutanordnung auf dem Rotor abweichen kann.

In einer bevorzugten Ausführung weist die elektrische Maschine Spulen auf, die zwischen 8 und 15 einzelne Leiterschleifen aufweist. Variiert die Leiterschleifenanzahl pro Spule beispielsweise zwischen 10 und 13 Leiterschleifen, so kann bei einer 14-nutigen Maschine eine relativ glatte Sinusfunktion der Leiterschleifen-Änderung erzeugt werden, indem näherungsweise jede aufeinanderfolgend kommutierte Spule sich genau um eine Leiterschleife ändert.

Die erfindungsgemäße Variation der Anzahl der Leiterschleifen pro Spulen ist auch auf punktsymmetrisch zur Rotorachse gewickelte Spulen anzuwenden, die als zwei symmetrische Teilspulen ausgebildet sind. Hierbei wird die Leiterschleifenanzahl der beiden Teilspulen bezüglich der nächstliegenden Teilspulen in gleichem Maße verändert, so dass keine zusätzlichen radialen Kräfte erzeugt werden.

Das erfindungsgemäße Verfahren zum Betreiben einer elektrischen Maschine - vorzugsweise einen Gleichstrommotors - hat den Vorteil, dass durch die erfindungsgemäße Variation der Leiterschleifenanzahl der einzelnen Spulen ein gleichbleibender Stromrippel mit relativ konstanter Amplitude erzeugt werden kann, der sich über verschiedene Arbeitsbereiche der elektrischen Maschine nur unwesentlich ändert. Durch die deutlich geringere Frequenz dieses zusätzlich erzeugten Stromrippels kann die Abtastgeschwindigkeit der Drehzahlauswerteeinheit verringert werden, wodurch die Anforderungen - und damit die Kosten - der Auswertevorrichtung reduziert werden können. Das erfindungsgemäß generierte Welligkeitssignal des Motorstroms kann besonders günstig für die Realisierung einer Einklemmschutzfunktion eines motorisch verstellten Teils verwendet werden. Dabei wird das die Drehzahl repräsentierende Signal mittels der Auswerteeinheit auf eine zeitliche Änderung untersucht, wozu die Zeitintervalle zwischen den einzelnen Stromrippeln ermittelt werden.

### Kurze Beschreibung der Zeichnungen

Ausführungen der Erfindung sind in der Zeichnung dargestellt und in der nachfolgenden Beschreibung näher erläutert.

Es zeigen
- Figur 1:: ein erstes Ausführungsbeispiel eines erfindungsgemäßen Rotors mit einer schematischen Darstellung der Änderung der Leiterschleifenanzahl, und
- Figur 2:: ein weiteres Ausführungsbeispiel einer elektrischen Maschine nebst schematischer Leiterschleifenanzahländerung.

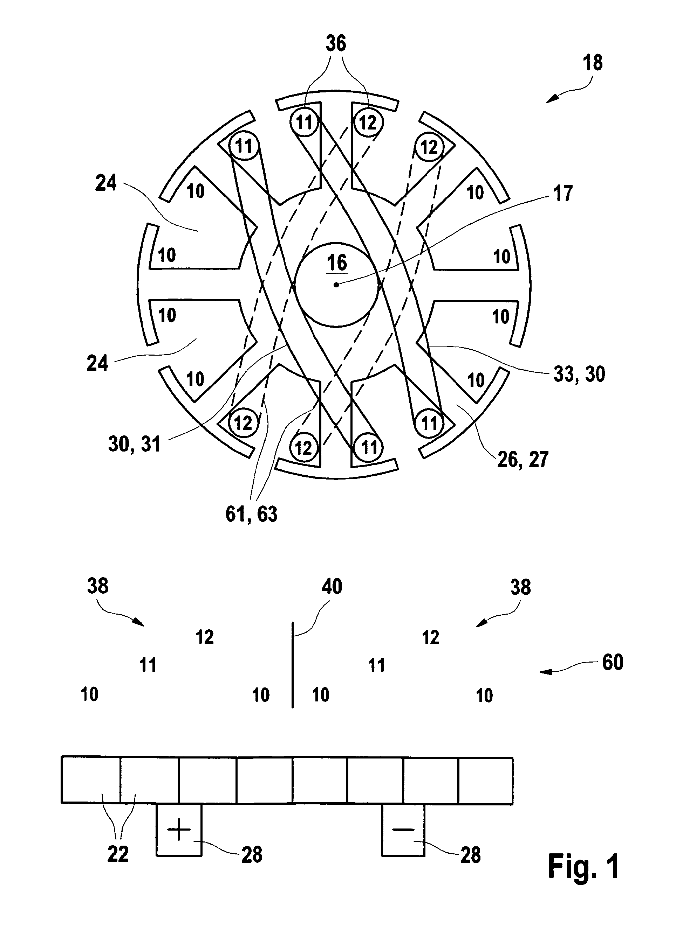

In Figur 1 ist eine elektrische Maschine 12 dargestellt, die beispielsweise als Gleichstrommotor 14 ausgebildet ist. Die elektrische Maschine 12 weist ein auf einer Rotorwelle 16 gelagerten Rotor 18 auf, der zur Aufnahme von elektrischen Spulen 30 mehrere Nuten 24 aufweist. Die Nuten 24 sind beispielsweise in einem Lamellenpaket 26 ausgebildet, das aus einzelnen, axial aufeinander gestapelten Lamellenblechen 27 besteht. Der Rotor 18 in Figur 1 weist beispielsweise acht Nuten 24 auf, in denen insgesamt acht Spulen 30 angeordnet sind. Die Spulen 30 sind beispielsweise mittels einer Durchmesserwicklung punktsymmetrisch zu einer Rotorachse 17 gewickelt, so dass in jeder Nut 24 zwei Halbspulen von unterschiedlichen Spulen 30 angeordnet sind. Die Spulen 30 sind elektrisch mit Kommutatorlamellen 22 eines Kommutators 20 verbunden, der mit nicht näher dargestellten elektrischen Bürsten 28 mit Strom beaufschlagt wird. Jede Spule 30 besteht aus einzelnen Leiterschleifen 36, deren Anzahl durch die in den Nuten 24 angegebene Zahlen wiedergegeben sind. So weist beispielsweise eine konkrete Spule 31 elf Leiterschleifen 36 auf, die durch sich gegenüberliegende Nuten 24 gewickelt sind. In dem gleichen Nutenpaar ist eine zweite Spule 33 mit elf Leiterschleifen 36 angeordnet, die im Ausführungsbeispiel zeitgleich mit der Spule 31 kommutiert wird. Die in Umfangsrichtung des Rotors 18 nächste Spulenpaar 61, 63 weist jeweils zwölf Leiterschleifen 36 auf. Danach folgen auf dem Rotor 18 vier Spulen 30 mit jeweils zehn Leiterschleifen 36, denen sich dann wieder das Spulenpaar 31, 33 mit jeweils elf Leiterschleifen 36 anschließt. In der rechten Bildhälfte sind die abgewickelten Kommutatorlamellen 22 des Kommutators 20 dargestellt, wobei die Abfolge der Zahlen jeweils die Anzahl der Leiterschleifen 36 der nacheinander kommutierten Spulen 30 wiedergibt. Dabei ergibt sich eine Reihenfolge der nacheinander kommutierten Spulen 30 mit einer jeweils unterschiedlichen Anzahl von Leiterschleifen 36. So haben die in einer Kommutierungsphase aufeinanderfolgenden Spulen 30 jeweils 10, 11, 12, 10 Leiterschleifen 36, so dass die Änderung der Leiterschleifenanzahl näherungsweise eine schematisch dargestellte Sinusfunktion 60 ergibt. Dabei werden von den acht Spulen 30 immer zwei gleichzeitig kommutiert, wobei diese immer gleich viele Leiterschleifen 36 aufweisen. Eine Kommutierungsphase, bis zu der der gleiche Kommutierungszustand wieder erreicht ist, beträgt hier vier aufeinanderfolgende Kommutierungszustände, die sich periodisch wiederholen. In Abhängigkeit der Anzahl der Bürsten 28 - bzw. in Abhängigkeit der damit korrespondierenden Anzahl von Magnetpolen 32 - weist die sinusförmige Kurve 60 der Leiterschleifenanzahländerung über eine Kommutatorumdrehung eine oder mehrere Perioden 38 auf. In Figur 1 sind zwei Perioden 38 dargestellt, die durch eine Spiegelebene 40 getrennt sind.

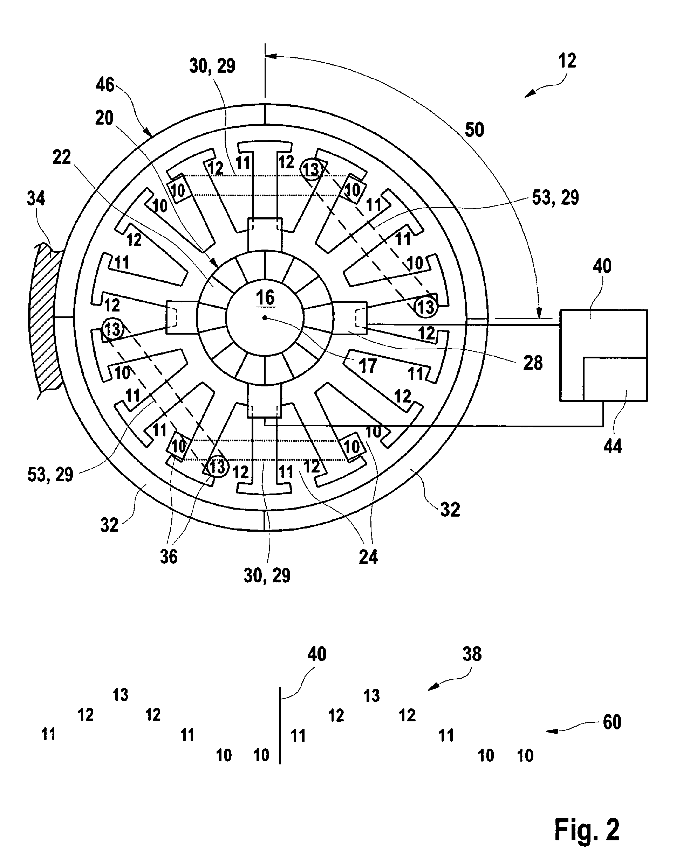

In Figur 2 ist ein weiteres Ausführungsbeispiel dargestellt, bei der die elektrische Maschine 12 einen Stator 34 mit einem Magnetring 46 aufweist der beispielsweise vier Magnetpole 32 mit einem Polteilungswinkel 50 von etwa 90° auf. Der Magnetring 46 ist als geschlossener umlaufender Ring ausgebildet, so dass die einzelnen Magnetpole 32 nahtlos ineinander übergehen. Auf der Rotorwelle 16 ist der Kommutator 20 angeordnet, an dem entsprechend der Anzahl der Magnetpole 32 gleich viele Bürsten 28 (beispielsweise vier) anliegen. In der unteren Bildhälfte ist wieder schematisch die sinusförmige Änderung der Leiterschleifenanzahl in der Reihenfolge der nacheinander kommutierten Spulen 30 dargestellt. Die Anzahl der Leiterschleifen 36 pro Spule 30 variiert hier beispielsweise zwischen 10 und 13, wobei die Änderung nur eine einzige Leiterschleife 36 pro nacheinander kommutierter Spule 30 beträgt. Eine Kommutierungsphase erstreckt sich hierbei über sieben Kommutierungszustände, die zusammen eine Periode der Sinuskurve 60 bilden. Dadurch ergibt sich eine besonders glatte Sinuskurve 60 für die Änderung der Leiterschleifenanzahl. In diesem Ausführungsbeispiel der vier-poligen Maschine 12 ergibt sich dadurch die vierfache Rotordrehfrequenz für die mittels der Leiterschleifenvariation generierte Frequenz der zusätzlichen Stromwelligkeit. Hierbei wird eine Schwingung mit der Magnetpolordnung auf den Motorstromverlauf eingeprägt. Eine solche Stromwelligkeits-Frequenz ist dabei deutlich niedriger als die entsprechende Nutfrequenz des Motorstromsignals. Die Abfolge der nacheinander kommutierten Spulen 30 gemäß der Sinuskurve 60 ist in diesem Fall nicht Deckungsgleich mit der Abfolge der Spulen 30 bezüglich des Umfangs des Rotors 18. Die Spulen 30 sind in diesem Ausführungsbeispiel jeweils als zwei symmetrische Teilspulen 29 ausgebildet, die geometrisch parallel zueinander spiegelbildlich zu einer gedachten Ebene durch die Rotorachse 17 angeordnet sind. Die beiden Teilspulen 29 sind dabei elektrisch ebenfalls parallel geschaltet und mit den jeweils gleichen Kommutatorlamellen 22 verbunden, so dass die beiden Teilspulen 29 zusammen bezüglich der Magnetpole 32 des Stators 34 wie eine einzige Spule 30 wirken. Dies ist beispielhaft an einer konkreten Spule 53 dargestellt, bei der die erste Teilspule 29 zwischen der ersten und der vierten Nut 24 im Uhrzeigersinn gewickelt ist, und die zweite Teilspule 29 zwischen der achten und der elften Nut 24 gewickelt ist. Diese aus zwei Teilspulen 29 bestehende Spule 53 weist beispielsweise jeweils dreizehn Leiterschleifen 36 auf. Die im Uhrzeigersinn darauf abfolgenden Spulen 30 des Rotors 18 bestehen jeweils aus 11, 10, 12, 12, 10, 11 Leiterschleifen 36. In dem Ausführungsbeispiel weist der Kommutator 20 vierzehn Kommutatorlamellen 22 auf, die mit den sieben Spulen 30 bestehend aus insgesamt vierzehn Teilspulen 29 verbunden sind. Dabei wird nach einer Kommutierung von sieben aufeinanderfolgenden Spulen 30 wieder die gleichengleiche Phasenlage der Kommutierung, wie bei der Ausgangsposition erreicht, so dass sich bei vierzehn Kommutatorlamellen 22 und vier Bürsten 28 vier Perioden 38 über eine Rotorumdrehung ergeben.

Zur Bestimmung von Drehzahlinformationen wird das durch die Bürsten 28 und den Kommutator 20 fließende Motorstromsignal bezüglich seiner Welligkeit ausgewertet, und daraus ein Signal gewonnen, dass die Drehzahl bzw. Periodendauer der Rotorumdrehung repräsentiert. Hierzu wird das Motorstromsignal einer Elektronikeinheit 40 zugeführt, die eine Einklemmschutzfunktion 44 aufweist. Um festzustellen ob beispielsweise eine bestimmte Schließkraft für ein mittels der elektrischen Maschine 12 zu verstellendes Teil überschritten wird, wird das die Drehzahl repräsentierende Signal auf seine Änderung untersucht. Dazu werden die vorzugsweise mit der Frequenz der erfindungsgemäßen Stromwelligkeit eingelesenen Messwerte miteinander verglichen, um ein Drehzahlabfall zu erkennen. Um die Schließkraftbegrenzung auszulösen, wird beispielsweise der Änderungswert des die Drehzahl repräsentierenden Signals mit einem vorgebbaren Wert verglichen, so dass eine bestimmte Schwelle für eine Schließkraft oder eine Federrate eingestellt werden kann.

Es sei angemerkt, dass hinsichtlich der in den Figuren und in der Beschreibung gezeigten Ausführungsbeispiele vielfältige Kombinationsmöglichkeiten der einzelnen Merkmale untereinander möglich sind. So kann beispielsweise die Anzahl der Magnetpole 32 und der Kommutatorlamellen 22 variiert werden. Dadurch kann das generierte Stromwelligkeitssignal an die Anforderung der Drehzahlauswertung angepasst werden, wobei das Stromwelligkeitssignal vorzugsweise eine kleinere Frequenz aufweist, als die Nutfrequenz. Die Anzahl, Anordnung und Ausbildung der Magnetpole 32, der Spulen 30, sowie der Nuten 24 können der jeweiligen Anwendung, insbesondere der jeweiligen Leistungsanforderung angepasst werden. So kann die elektrische Maschine 12 beispielsweise auch als Außenläufer ausgebildet sein. Ebenso kann das Wickelverfahren der Spulen 30 variiert werden, beispielsweise auch Einzelzahnwicklungen verwendet werden, deren Leiterschleifenanzahl erfindungsgemäß moduliert wird. Die elektrische Maschine 12 findet vorzugsweise Anwendung für Stellantriebe im Kraftfahrzeug, beispielsweise zur Verstellung von Sitzteilen, Fensterscheiben und Abdeckungen- ist jedoch nicht auf solche Anwendungen beschränkt.

## Patentansprüche

1. Elektrische Maschine (12), insbesondere zum motorischen Verstellen beweglicher Teile im Kraftfahrzeug, mit einem Stator(34) und einem Rotor (18), wobei auf dem Rotor (18) Nuten (24) ausgebildet sind, in denen einzelne Leiterschleifen (36) von elektrischen Spulen (30) angeordnet sind, die mit Kommutatorlamellen (22) eines Kommutators (20) kontaktiert sind, und mit einer Auswerteeinheit (40), die aus der Welligkeit eines Motorstromsignals Drehzahlinformationen ermittelt, **dadurch gekennzeichnet, dass** die Anzahl der einzelnen Leiterschleifen (36) der Spulen (30) derart gewählt ist, dass die Abfolge der Anzahl der Leiterschleifen (36) in der Reihenfolge ihrer Kommutierung näherungsweise eine Sinusfunktion (60) darstellt.

2. Elektrische Maschine (12) nach Anspruch 1, **dadurch gekennzeichnet, dass** sich die Anzahl der Leiterschleifen (36) zweier nacheinander kommutierter Spulen (30) um genau eine Leiterschleife (36) unterscheidet.

3. Elektrische Maschine (12) nach einem der Ansprüche 1 oder 2, **dadurch gekennzeichnet, dass** der Rotor (18) genau vierzehn Nuten (24) aufweist, und der Stator (34) insbesondere genau vier Magnetpole (32) aufweist, die vorzugsweise auf einem geschlossenen, einteiligen Magnetring (46) angeordnet sind.

4. Elektrische Maschine (12) nach einem der vorhergehenden Ansprüche, **dadurch gekennzeichnet, dass** der Kommutator (20) eine Anzahl von Kommutatorlamellen (22) aufweist, die kein Vielfaches der Anzahl der Magnetpole (32) ist.

5. Elektrische Maschine (12) nach einem der vorhergehenden Ansprüche, **dadurch gekennzeichnet, dass** am Kommutator (20) genauso viele Bürsten (28) anliegen, wie die Anzahl der Magnetpole (32), die am Stator (34) angeordnet sind.

6. Elektrische Maschine (12) nach einem der vorhergehenden Ansprüche, **dadurch gekennzeichnet, dass** durch die Abfolge der Anzahl der Leiterschleifen (36) über eine Kommutierungsphase genau eine Periode (38) mit einem Minimum und einem Maximum modelliert wird.

7. Elektrische Maschine (12) nach einem der vorhergehenden Ansprüche, **dadurch gekennzeichnet, dass** die Reihenfolge der Anordnung der Spulen (30) bezüglich der Kommutierungsfolge sich von der Abfolge der räumlichen Anordnung der Spulen (30) über den Umfang des Rotors (18) unterscheidet.

8. Elektrische Maschine (12) nach einem der vorhergehenden Ansprüche, **dadurch gekennzeichnet, dass** die Anzahl der einzelnen Leiterschleifen (36) pro Spule (30) zwischen acht und fünfzehn, insbesondere zwischen zehn und dreizehn beträgt.

9. Elektrische Maschine (12) nach einem der vorhergehenden Ansprüche, **dadurch gekennzeichnet, dass** die Spulen (30) als punktsymmetrisch bezüglich einer Drehachse (17) des Rotors (18) Teilspulen (29) ausgebildet sind - die insbesondere elektrisch parallel oder in Reihe zueinander geschaltet sind -, und die punktsymmetrischen Teilspulen (29) immer exakt die gleiche Anzahl von Leiterschleifen (36) aufweisen.

10. Verfahren zum Betreiben einer elektrischen Maschine (12) mit folgenden Schritten:
- Bereitstellen einer elektrische Maschine (12), insbesondere zum motorischen Verstellen beweglicher Teile im Kraftfahrzeug, mit einem Stator (34) und einem Rotor (18), wobei auf dem Rotor (18) Nuten (24) ausgebildet sind, in denen einzelne Leiterschleifen (36) von elektrischen Spulen (30) angeordnet sind, die mit Kommutatorlamellen (22) eines Kommutators (20) kontaktiert sind, und mit einer Auswerteeinheit (40), die aus der Welligkeit eines Motorstromsignals Drehzahlinformationen ermittelt,
- **gekennzeichnet durch** Wahl der Anzahl der einzelnen Leiterschleifen (36) der Spulen (30) derart, dass die Abfolge der Anzahl der Leiterschleifen (36) in der Reihenfolge ihrer Kommutierung näherungsweise eine Sinusfunktion (60) darstellt.

11. Verfahren zum Betreiben einer elektrischen Maschine (12) nach Anspruch 10, **dadurch gekennzeichnet, dass** als Drehzahlinformation ein eine Drehzahl oder die Periodendauer der Rotorumdrehung repräsentierendes Signal der Auswerteeinheit (40) zugeführt wird, die aufgrund einer zeitlichen Änderung dieses Signals das Einklemmen des beweglichen Teils erkennt, und die elektrische Maschine reversiert und/oder stoppt.

12. Verfahren zum Betreiben einer elektrischen Maschine (12) nach einem der Ansprüche 10 oder 11, **dadurch gekennzeichnet, dass** die Änderung des Signals mit einem abgespeicherten Grenzwert verglichen wird, um beim Über- oder Unterschreiten des Grenzwertes die Einklemmschutzfunktion (44) auszulösen.

## Claims

1. Electric machine (12), in particular for the motor-driven adjustment of moving parts in a motor vehicle, comprising a stator (34) and a rotor (18), wherein slots (24) are formed in the rotor (18), with individual conductor loops (36) of electrical coils (30) being arranged in said slots, wherein contact has been made between said coils and commutator segments (22) of a commutator (20), and comprising an evaluation unit (40), which determines speed information from the ripple of a motor current signal, **characterized in that** the number of individual conductor loops (36) of the coils (30) is selected such that the sequence of the number of conductor loops (36) in the order of commutation thereof represents approximately a sine function (60).

2. Electric machine (12) according to Claim 1, **characterized in that** the number of conductor loops (36) of two successively commutated coils (30) differs by precisely one conductor loop (36).

3. Electric machine (12) according to either of Claims 1 and 2, **characterized in that** the rotor (18) has precisely fourteen slots (24), and the stator (34) has in particular precisely four magnet poles (32), which are preferably arranged on a closed, integral magnet ring (46).

4. Electric machine (12) according to one of the preceding claims, **characterized in that** the commutator (20) has a number of commutator segments (22) which is not a multiple of the number of magnet poles (32).

5. Electric machine (12) according to one of the preceding claims, **characterized in that** precisely as many brushes (28) rest on the commutator (20) as the number of magnet poles (32) which are arranged on the stator (34).

6. Electric machine (12) according to one of the preceding claims, **characterized in that** precisely one period (38) with a minimum and a maximum is modelled by the sequence of the number of conductor loops (36) over a commutation phase.

7. Electric machine (12) according to one of the preceding claims, **characterized in that** the order of the arrangement of the coils (30) with respect to the commutation sequence differs from the sequence of the physical arrangement of the coils (30) over the circumference of the rotor (18).

8. Electric machine (12) according to one of the preceding claims, **characterized in that** the number of individual conductor loops (36) per coil (30) is between eight and fifteen, in particular between ten and thirteen.

9. Electric machine (12) according to one of the preceding claims, **characterized in that** the coils (30) are in the form of coil elements (29) which have point symmetry with respect to an axis of rotation (17) of the rotor (18), and which are in particular connected electrically in parallel or in series with one another, and the point-symmetrical coil elements (29) always have precisely the same number of conductor loops (36).

10. Method for operating an electric machine (12) comprising the following steps:
- providing an electric machine (12), in particular for the motor-driven adjustment of moving parts in a motor vehicle, comprising a stator (34) and a rotor (18), wherein slots (24) are formed in the rotor (18), with individual conductor loops (36) of electrical coils (30) being arranged in said slots, wherein contact has been made between said coils and commutator segments (22) of a commutator (20), and comprising an evaluation unit (40), which determines speed information from the ripple of a motor current signal,
- **characterized by** selection of the number of individual conductor loops (36) of the coils (30) in such a way that the sequence of the number of conductor loops (36) in the order of commutation thereof represents approximately a sine function (60).

11. Method for operating an electric machine (12) according to Claim 10, **characterized in that** a signal which is representative of a speed or the period duration of the rotor revolution is supplied to the evaluation unit (40) as speed information, said evaluation unit identifying jamming of the moving part on the basis of a change in this signal over time and reversing and/or stopping the electric machine.

12. Method for operating an electric machine (12) according to either of Claims 10 and 11, **characterized in that** the change in the signal is compared with a stored limit value in order to trigger the anti-jamming function (44) when said limit value is overshot or undershot.

## Revendications

1. Machine électrique (12), notamment pour le positionnement motorisé de pièces mobiles dans un véhicule automobile, comprenant un stator (34) et un rotor (18), des rainures (24) étant formées sur le rotor, dans lesquelles sont disposées les boucles conductrices (36) individuelles de bobines électriques (30), lesquelles sont mises en contact avec des lamelles de collecteur (22) d'un collecteur (20), et comprenant une unité d'interprétation (40) qui détermine des informations de vitesse de rotation à partir de l'ondulation d'un signal de courant de moteur, **caractérisée en ce que** le nombre de boucles conductrices (36) individuelles des bobines (30) est choisi de telle sorte que la séquence des nombres de boucles conductrices (36) dans l'ordre de leur commutation représente approximativement une fonction sinusoïdale (60).

2. Machine électrique (12) selon la revendication 1, **caractérisée en ce que** le nombre de boucles conductrices (36) de deux bobines (30) commutant l'une après l'autre se différentient exactement d'une boucle conductrice (36).

3. Machine électrique (12) selon l'une des revendications 1 ou 2, **caractérisée en ce que** le rotor (18) présente exactement quatorze rainures (24) et le stator (34) présente notamment exactement quatre pôles magnétiques (32) qui sont disposés de préférence sur un anneau magnétique (46) monobloc fermé.

4. Machine électrique (12) selon l'une des revendications précédentes, **caractérisée en ce que** le collecteur (20) présente un nombre de lamelles de collecteur (22) qui n'est pas un multiple du nombre de pôles magnétiques (32).

5. Machine électrique (12) selon l'une des revendications précédentes, **caractérisée en ce que** le nombre de balais (28) qui sont appliqués sur le collecteur (20) est exactement égal au nombre de pôles magnétiques (32) qui sont disposés sur le stator (34).

6. Machine électrique (12) selon l'une des revendications précédentes, **caractérisée en ce qu'**exactement une période (38) avec un minimum et un maximum est modélisée par la séquence du nombre de boucles conductrices (36) sur une phase de commutation.

7. Machine électrique (12) selon l'une des revendications précédentes, **caractérisée en ce que** l'ordre de la disposition des bobines (30) en référence à l'ordre de commutation est différent de la séquence de la disposition dans l'espace des bobines (30) sur le pourtour du rotor (18).

8. Machine électrique (12) selon l'une des revendications précédentes, **caractérisée en ce que** le nombre de boucles conductrices (36) individuelles par bobine (30) est compris entre huit et quinze, notamment entre dix et treize.

9. Machine électrique (12) selon l'une des revendications précédentes, **caractérisée en ce que** les bobines (30) sont réalisées sous la forme de bobines partielles (29) à symétrie ponctuelle par rapport à un axe de rotation (17) du rotor (18), lesquelles sont notamment branchées électriquement en parallèle ou en série les unes avec les autres, et les bobines partielles (29) à symétrie ponctuelle présentent toujours exactement le même nombre de bouches conductrices (36).

10. Procédé pour faire fonctionner une machine électrique (12), comprenant les étapes suivantes :
- mise à disposition d'une machine électrique (12), notamment pour le positionnement motorisé de pièces mobiles dans un véhicule automobile, comprenant un stator (34) et un rotor (18), des rainures (24) étant formées sur le rotor, dans lesquelles sont disposées les boucles conductrices (36) individuelles de bobines électriques (30), lesquelles sont mises en contact avec des lamelles de collecteur (22) d'un collecteur (20), et comprenant une unité d'interprétation (40) qui détermine des informations de vitesse de rotation à partir de l'ondulation d'un signal de courant de moteur,
**caractérisé en ce que** le choix du nombre de boucles conductrices (36) individuelles des bobines (30) est choisi de telle sorte que la séquence des nombres de boucles conductrices (36) dans l'ordre de leur commutation représente approximativement une fonction sinusoïdale (60).

11. Procédé pour faire fonctionner une machine électrique (12) selon la revendication 10, **caractérisé en ce qu'**un signal représentant la vitesse de rotation ou la durée de la période d'un tour du rotor est acheminé à l'unité d'interprétation (40) en tant qu'information de vitesse de rotation, laquelle détecte un blocage de la pièce mobile en se basant sur une variation dans le temps de ce signal et inverse le sens de rotation de la machine électrique et/ou l'arrête.

12. Procédé pour faire fonctionner une machine électrique (12) selon l'une des revendications 10 ou 11, **caractérisé en ce que** la variation du signal est comparée avec une valeur limite mise en mémoire afin de déclencher la fonction de protection contre le blocage (44) en cas de franchissement de la valeur limite vers le haut ou vers le bas.
